# EUROPEAN PATENT SPECIFICATION

(11) **EP 3 085 523 B1**
(45) Date of publication and mention of the grant of the patent: **01.04.2020**
(21) Application number: 15165041.3
(22) Date of filing: 24.04.2015
(51) Int. Cl.: B29D 30/06, B29C 73/16, B60C 19/12

(54) **A METHOD FOR MANUFACTURING A SEALANT LAYER TO A PNEUMATIC TIRE**
VERFAHREN ZUR HERSTELLUNG EINER DICHTSCHICHT FÜR EINEN LUFTREIFEN
PROCÉDÉ DE FABRICATION D'UNE COUCHE D'ÉTANCHÉITÉ POUR UN PNEUMATIQUE

(43) Date of publication of application: 26.10.2016
(73) Proprietor: Nokian Renkaat Oyj, 37101 Nokia (FI)
(72) Inventor: Mällinen, Jarkko, FI-37100 Nokia (FI); Moisio, Harri, FI-37130 Nokia (FI); Kukkonen, Esko, FI-33710 Tampere (FI)
(74) Representative: Berggren Oy, Tampere

(56) References cited:
- EP-A1- 0 007 982
- EP-A1- 2 674 287
- EP-A2- 0 080 968
- EP-A2- 0 161 201
- WO-A1-03/101709
- JP-A- 2001 018 609
- US-A- 4 115 172
- US-A- 4 359 078
- US-A1- 2003 150 544
- US-A1- 2007 044 893

## Description

### TECHNICAL FIELD

The invention concerns in general the technology of pneumatic tires, such as for cars and other vehicles. In particular the invention concerns the way in which the pneumatic tire is made self-sealing for a case of puncture to happen during use. The invention concerns in particular a method for manufacturing such self-sealing sealant layer to a tire.

### BACKGROUND OF THE INVENTION

In pneumatic tires for cars a puncture caused by a sharp object hitting the tire has been a problem since the beginning of use of pneumatic tires. It is known from various patents that a puncture can be sealed by providing a suitable adhesive agent to stick to the object causing the puncture. When the object is removed from the tire, the adhesive agent fills the puncture and prevents the pressurized air to escape from the tire.

It has been presented various constructions to achieve such puncture resistant pneumatic tire. For example in patent application EP1484199A1 it is presented a sealant impregnated sponge construction attached to the innerliner of the tire. The sealant material is only to the radially outer surface of the sponge and not to be exposed on the radially inner surface side thereof, sticking dust and foreign object to the radially inner surface of the sponge layer can be avoided during transporting, stocking and the like. The patent US4115172 discloses a method for applying sealant material to the interior of a tire. The document WO03/101709 discloses a sealant material suitable for a tire and a corresponding tire. The document EP0007982 discloses a self-sealing pneumatic tire with puncture sealing properties and a method of manufacturing such a tire.

In addition, the document US 4,359,078 discloses a self-sealing pneumatic tire. The tire comprises a sealing composite strip that can be ap-plied in a form of a sheet or strips that dimensional stability and resistance to flow. Moreover, the document EP 0 080 968 discloses a method for applying sealant material to an inside surface of a tire. Therein, a continuous strip of puncture sealing material is applied.

### SUMMARY OF THE INVENTION

According to claim 1, the present invention relates to a method for manufacturing a self-sealing sealant layer to a pneumatic tire for a vehicle, wherein the tire has been pre-manufactured, vulcanized and cooled to a storage temperature,
- the tire is positioned to a tire rotator device such that the rotational axis of the tire is horizontal and the tire is rotated around said horizontal axis,
- a sealant material is heated,
- the sealant material is extruded downwards on to an innerliner of the tire by an applicator head comprising a nozzle, the applicator head is moved in a traverse direction so that the sealant material forms adhesive strips that form a substantially continuous sealant layer on a puncture resistivity area, a number of revolves of the tire is adapted to a width of the adhesive strip so that tire is rotated as many rounds as necessary for the adhesive strips to form the sealant layer. In the method, the sealant material comprises butyl rubber and the sealant material has a temperature within range 100 to 140 °C and viscosity within range 500 Pas to 1500 Pas when applied. Moreover, the shape of the nozzle is such that the adhesive strips overlap each other and form a continuous and substantially even thickness of the sealant layer (10). The method enables the preparation of the puncture resistivity to be completed just before the tire is assembled and to a tire already transported to proximity of the user or assembly place. Thus the construction of the tire or sealant layer does not need to take in to account all the possible deteriorating factors of a sealing layer between the actual tire manufacturing and the assembly on a wheel and further to a vehicle.

The present disclosure also relates to a pneumatic tire for a vehicle, the tire structure comprising a tread layer, base layer, belt layer and ply layer forming the base part of the tire and ply layer continuing together with a sidewall to the sides of the tire to form a side part, an innerliner is configured to form an inside of the tire wherein a self-sealing sealant layer covers at least a base part section of the innerliner and optionally a part of the sidewall section, the sealant layer is configured to adhere to an object puncturing the tire structure, the sealant layer comprises non-hardened elastic material capable of sealing a puncture caused by a relatively sharp object penetrated through the tire structure up to the pneumatic volume of the tire, wherein the sealant layer comprises at least butyl rubber and has a viscosity in a range of over 3000 Pas measured at +21 °C.

One objective of the present invention is to ensure that the application of a sealing layer is performed to a tire in an efficient manner. The present method can be applied easily to tires of different size without modifying the actual method at all. Only attachment to the tire rotator device and set up of the control system, parameters such as the rotational speed of the tire, number of rotations, adhesive strip feed and temperature i.e. sealant layer thickness and traverse speed or pitch of the applicator head and possibly some more need to be set to the control system.

Regarding the sealant material, one of the ingredients is butyl rubber which has good properties as air sealant. However one issue of consideration is the proper viscosity / temperature dependence. As the applicant produces winter tires for cold environment, the sealant layer need to be such that the self-sealing properties functions also on cold temperatures. This has been ensured during the tests and the end result is a viscosity as claimed. There are several possibilities to achieve that result and therefore is has not been discussed here any further.

The exemplary embodiments of the invention presented in this patent application are not to be interpreted to pose limitations to the applicability of the appended claims. The verb "to comprise" is used in this patent application as an open limitation that does not exclude the existence of also unrecited features. The features recited in depending claims are mutually freely combinable unless otherwise explicitly stated.

The novel features which are considered as characteristic of the invention are set forth in particular in the appended claims. The invention itself, however, both as to its method of operation and its construction, together with additional objects and advantages thereof, will be best understood from the following description of specific embodiments when read in connection with the accompanying drawings.

### BRIEF DESCRIPTION OF THE DRAWINGS

Fig. 1 illustrates an overall view of the machinery for performing the method of present invention,
Fig. 2 illustrates a detailed embodiment of the method in progress.

### DETAILED DESCRIPTION OF EMBODIMENTS OF THE INVENTION

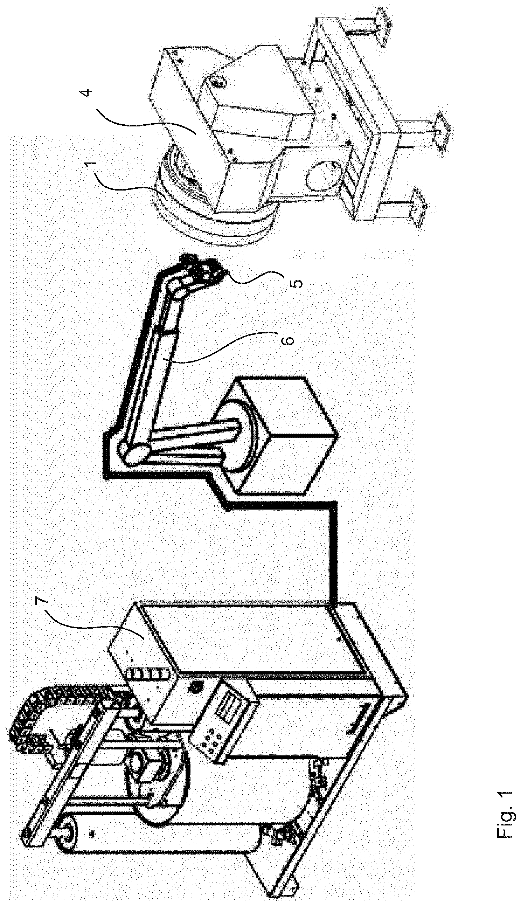

In fig 1 an overall view of the machinery for performing the method of present invention. There is a tire 1 that has been pre-manufactured, vulcanized and cooled to a storage temperature, - the tire 1 is positioned to a tire rotator device 40 such that the rotational axis of the tire is horizontal and the tire 1 is rotated around said horizontal axis. The tire rotator device keeps the tire in its place and rotated so that application of the sealant material can be done downwards to the rotating tire. There is provided an applicator head 5 for application of the sealant material. The applicator head 5 is moved by an applicator device 6 such as a robot arm or corresponding. Further there is a sealant material preparation unit 7, where the sealant material is mixed, heated and pumped to the applicator head 5.

According to an embodiment of the present device configuration, there is a spreader device 42 in the rotator device 4 or in the applicator head 5 to spread the bead wires 17 of the tire 1 so that the applicator head 5 has room to operate inside the tire 1 and the application of the adhesive strip 105 can be started in a position near or on the sidewall 16. The spreader device 42 can comprise for example rollers having vertical axis of rotation to spread the bead wires 17 outwards.

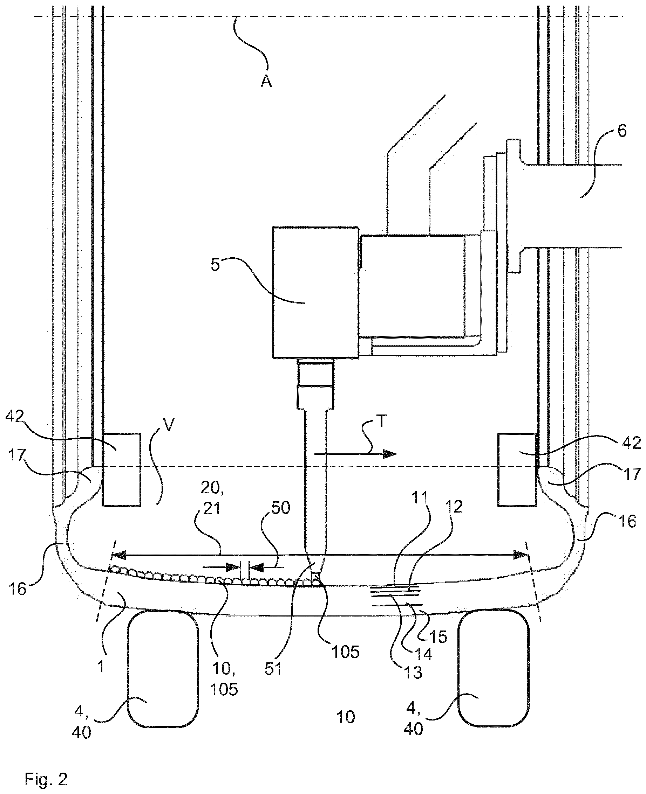

In fig 2 there is presented an embodiment of the method for manufacturing a self-sealing sealant layer 10 to a pneumatic tire 1 for a vehicle, wherein the tire has been pre-manufactured, vulcanized and cooled to a storage temperature,
- the tire 1 is positioned to a tire rotator device 4, 40 such that the rotational axis A of the tire is horizontal and the tire 1 is rotated around said horizontal axis A,
- a sealant material is heated to a temperature of 70 - 200 °C,
- the sealant material is extruded downwards as an adhesive strip 105 on to an innerliner 11 of the tire by an applicator head 5, the applicator head 5 is extruding the adhesive strip 105 of the sealant material, the applicator head 5 is moved in a traverse direction so that the adhesive strips 105 form a substantially continuous sealant layer 10 on a puncture resistivity area 20, a number of revolves of the tire 1 is adapted to a width of the adhesive strip 105 so that tire 1 is rotated as many rounds as necessary for the adhesive strips 105 to form the sealant layer 10. The extrusion of the sealant material is done downwards to ensure good adherence and setting on the innerliner of the tire. The sealant material is in liquid or semi-liquid state when applied and the downward direction of extrusion has been shown to give the best results for the method.

The applicator head 5 is preferably moved so that there is one straight circumferentially aligned adhesive strip completed first and then the applicator head is moved at a distance of a pitch 50 to the traverse direction to complete the following round. This is repeated until the whole area to be coated with the sealant layer is covered. It is also possible to make a coil like or other pattern, but it seems that the straight circumferential adhesive strip produces the most even layer. However this depends also on a nozzle 51 of the applicator head. Also a zig-zag-pattern is possible to apply on the edge areas of the sealant layer to improve the adherence to the innerliner or side walls.

According to an embodiment the sealant layer 10 is applied directly on an inner paint 111 of the innerliner 11. However, it is of consideration that the innerliner or interior of the tire may have got dirty during transportation or storage. This may be for example dust, etc. which may reduce the adherence of the sealant layer 10. According to an embodiment the innerliner or interior of the tire is cleaned before the sealant layer 10 is applied on the innerliner 11. The innerliner of the tire is cleaned mechanically and/or chemically and/or by other mean such as with laser beam or by heating. This may comprise for example steps of vacuum cleaning, air or steam blowing, washing with a suitable detergent, or such. Furthermore the inner side of the tire may be applied with a primer for ensuring the adhering of the sealant layer 10. The primer is a chemical compound that improves the adherence between the adhesive strip and the innerliner 11.

According to an embodiment the applicator head 5 comprises a nozzle 51 and the shape of the nozzle 51 is such that the adhesive strips 105 are designed to form a continuous and substantially even thickness of the sealant layer 10 after the adhesive strip has set on its position. Thus in this embodiment there may be an intended clearance between the adhesive strips during application but the adhesive strips flow so that the clearance is vanished.

The shape of the nozzle 51 is such that the adhesive strips 105 are designed to overlap each other in an extent to form a continuous and substantially even thickness of the sealant layer 10. It may be even so that the sealant layer 10 is formed of multiple thin layers that overlap each other. It is also possible to have different properties in these different layers, like first layer is an adhesion layer, then the layers for most sealing properties and then a surface layer possible for least surface active material to be in contact with the pressurized air inside the tire, just to mention an example of possible functions of the multilayer sealant layer 10. In general these parameters depend on the flow and sticking capabilities of the sealant material during and after the application. Also the actual shape of the nozzle cross section depends on these same parameters, the shape can be for example rounded, elliptical, oval, square, parallelogram, triangular, rhombus, etc..

The sealant material has a temperature within range 100 to 140 °C or other application temperature range as claimed and viscosity within range 500 Pas to 1500 Pas when applied. The aim is to get the flowing properties of the sealant material such that the sealant material flows smoothly through the applicator device 6, applicator head 5 and nozzle 51 on to the innerliner and there sealant material which now forms the adhesive strip 105 adheres firmly on the innerliner without too much flowing. To some extent flowing is a wanted property, separate adhesive strips need to stick to each other and form a continuous layer of possibly substantially even thickness before it has cured or cooled down to the room temperature. The sealant layer 10 is preferably 3 mm ±1.5 mm in thickness after a setting time i.e. the time after which there are no substantial flowing happening or the flowing is relatively slow compared to the flowing just after the application of the adhesive strip. By this layer thickness there is enough volume to seal even a rather large puncture but still the layer is thin enough for not causing any unwanted flowing. Here the previously mentioned "cured" means that the sealant material has still the sticky properties but the viscosity has increased such that the flowing capability is reduced. Preferably the sealant material has a viscosity of > 3000 Pas when cooled to the room temperature. Here the substantially even thickness means that there is enough sealant material on the sealant layer to perform the function, this seem to happen when possible grooves in depth of the sealant layer are less than 50% of the high thickness of the sealant layer.

As a result of the above described method, the outcome is a pneumatic tire 1 for a vehicle, the tire 1 structure comprising a tread layer 15, base layer 14, belt layer 13 and ply layer 12 forming the base part 21 of the tire and ply layer continuing together with a sidewall 16 to the sides of the tire to form a side part, an innerliner 11 is configured to form an inside of the tire wherein a self-sealing sealant layer 10 covers at least a base part section of the innerliner and optionally a part of the sidewall section, the sealant layer is configured to adhere to an object puncturing the tire structure, the sealant layer comprises non-hardened elastic material capable of sealing a puncture caused by a relatively sharp object penetrated through the tire structure up to the pneumatic volume V of the tire, wherein the sealant layer comprises at least butyl rubber and has a viscosity in a range of over 3000 Pas measured at +21 °C.

Variations and modifications to the embodiments described above are possible without departing from the scope of the amended claims.

### REFERENCE SIGNS USED IN FIGURES

- 1: tire
- 10: sealant layer
- 105: adhesive strip
- 11: innerliner
- 111: inner paint
- 12: ply layer
- 13: belt layer
- 14: base layer
- 15: tread layer
- 16: sidewall
- 17: bead wire
- 20: puncture resistivity area
- 21: base part (area)
- 4: tire rotating device
- 40: support roller
- 42: spreader device
- 5: applicator head
- 50: pitch of the applicator head
- 51: nozzle
- 6: applicator device
- 7: sealant material preparation unit
- V: pneumatic volume or the tire
- T: traverse direction
- A: rotational axis of the tire

## Claims

1. A method for manufacturing a self-sealing sealant layer (10) to a pneumatic tire (1) for a vehicle, wherein the tire has been pre-manufactured, vulcanized and cooled to a storage temperature,
- the tire (1) is positioned to a tire rotator device (40) such that the rotational axis (12) of the tire is horizontal and the tire (1) is rotated around said horizontal axis (12),
- a sealant material is heated, and
- the tire (1) is positioned to a tire rotator device (4, 40) such that the rotational axis (A) of the tire is horizontal and the tire (1) is rotated around said horizontal axis (A),
wherein
- the sealant material comprises butyl rubber,
- the sealant material has a temperature within range 100 to 140 °C and viscosity within range 500 Pas to 1500 Pas when applied,
- the sealant material is extruded downwards on to an innerliner (11) of the tire by an applicator head (5) comprising a nozzle (51) and the applicator head (5) is moved in a traverse direction (T) so that the sealant material forms adhesive strips (105) that form a substantially continuous sealant layer (10) on a puncture resistivity area (20), wherein the traverse direction (T) is parallel to the rotational axis (A), and
- a number of revolves of the tire (1) is adapted to a width of the adhesive strip (105) so that tire (1) is rotated as many rounds as necessary for the adhesive strips (105) to form the sealant layer (10), wherein
- the shape of the nozzle (51) is such that the adhesive strips (105) overlap each other and form a continuous and substantially even thickness of the sealant layer (10).

2. The method according to claim 1, **characterized in that** the sealant layer (10) is applied directly on an inner paint (111) of the innerliner (11).

3. The method according to claim 1, **characterized in that** the inner liner or interior of the tire is cleaned before the sealant layer (10) is applied on the innerliner (11).

4. The method according to claim 3, **characterized in that** the inner liner of the tire is cleaned mechanically and/or chemically and/or by other mean such as with laser beam or by heating.

5. The method according to claim 1, **characterized in that** the inner side of the tire is applied with a primer for ensuring the adhering of the sealant layer (10).

6. The method according to claim 1, **characterized in that** the sealant layer (10) is 3 mm ±1.5 mm in thickness after a setting time.

## Patentansprüche

1. Ein Verfahren zum Herstellen einer selbstdichtenden Dichtmittelschicht (10) an einem Luftreifen (1) für ein Fahrzeug, wobei der Reifen vorgefertigt, vulkanisiert und auf eine Lagertemperatur abgekühlt wurde,
- der Reifen (1) so an einer Reifendreheinrichtung (40) positioniert wird, dass die Drehachse (12) des Reifens horizontal ist und sich der Reifen (1) um die horizontale Achse (12) dreht,
- ein Dichtungsmaterial erwärmt wird, und
- der Reifen (1) so an einer Reifendreheinrichtung (4, 40) positioniert wird, dass die Drehachse (A) des Reifens horizontal ist und sich der Reifen (1) um die horizontale Achse (A) dreht,
wobei
das Dichtungsmaterial Butylgummi aufweist,
- das Dichtungsmaterial eine Temperatur in dem Bereich zwischen 100 und 140° C und eine Viskosität in einem Bereich zwischen 500 Pas und 1500 Pas hat, wenn es aufgebracht wird,
- das Dichtungsmaterial nach unten auf einen Innenmantel (11) des Reifens mittels eines Applikatorkopfes (5) mit einer Düse (51) extrudiert wird und der Applikatorkopf (5) in einer Querrichtung (T) so bewegt wird, dass das Dichtungsmaterial Klebestreifen (105) bildet, die eine im Wesentlichen kontinuierliche Dichtmittelschicht (10) auf einer Durchstoßwiderstandsfläche (20) bilden, wobei die Querrichtung (T) parallel zur Drehachse (A) ist, und
- eine Anzahl von Umdrehungen des Reifens (1) auf eine Breite des Klebestreifens (105) so angepasst wird, dass der Reifen (1) sich so viele Runden wie erforderlich dreht, damit die Klebestreifen (105) die Dichtmittelschicht (10) bilden, wobei
- die Form der Düse (51) derart ist, dass sich die Klebestreifen (105) miteinander überlappen und eine kontinuierliche und im Wesentlichen gleiche Dicke der Dichtmittelschicht (10) bilden.

2. Verfahren gemäß Anspruch 1, **dadurch gekennzeichnet, dass** die Dichtmittelschicht (10) direkt auf eine Innenfarbe (111) des Innenmantels (11) aufgebracht wird.

3. Verfahren gemäß Anspruch 1, **dadurch gekennzeichnet, dass** der Innenmantel oder das Innere des Reifens gereinigt wird, bevor die Dichtmittelschicht (10) auf den Innenmantel (11) aufgebracht wird.

4. Verfahren gemäß Anspruch 3, **dadurch gekennzeichnet, dass** der Innenmantel des Reifens mechanisch und/oder chemisch und/oder auf andere Weise wie z. B. mit Laserstrahl oder durch Erhitzen gereinigt wird.

5. Verfahren gemäß Anspruch 1, **dadurch gekennzeichnet, dass** auf die Innenseite des Reifens eine Grundierung aufgetragen wird, um das Anhaften der Dichtmittelschicht (10) sicherzustellen.

6. Verfahren gemäß Anspruch 1, **dadurch gekennzeichnet, dass** die Dichtmittelschicht (10) nach einer Abbindezeit eine Dicke von 3 mm ± 1,5 mm aufweist.

## Revendications

1. Procédé de fabrication d'une couche d'étanchéité auto-obturante (10) pour un pneu (1) pour un véhicule, dans lequel le pneu a été préfabriqué, vulcanisé et refroidi à une température de stockage,
- le pneu (1) est positionné sur un dispositif de rotation de pneu (40) de sorte que l'axe de rotation (12) du pneu soit horizontal et que le pneu (1) tourne autour dudit axe horizontal (12),
- un matériau d'étanchéité est chauffé, et
- le pneu (1) est positionné sur un dispositif de rotation de pneu (4, 40) de sorte que l'axe de rotation (A) du pneu soit horizontal et que le pneu (1) tourne autour dudit axe horizontal (A),
dans lequel
- le matériau d'étanchéité comprend du caoutchouc butylique,
- le matériau d'étanchéité a une température se trouvant dans la plage allant de 100 à 140°C et une viscosité se trouvant dans la plage allant de 500 Pas à 1500 Pas lorsqu'il est appliqué,
- le matériau d'étanchéité est extrudé vers le bas sur un calandrage intérieur (11) du pneu par une tête d'application (5) comprenant une buse (51) et la tête d'application (5) est déplacée dans une direction transversale (T) de sorte que le matériau d'étanchéité forme des bandes adhésives (105) qui forment une couche d'étanchéité sensiblement continue (10) sur une zone de résistivité à la crevaison (20), dans lequel la direction transversale (T) est parallèle à l'axe de rotation (A), et
- un nombre de tours du pneu (1) est adapté à une largeur de la bande adhésive (105) de sorte que le pneu (1) tourne autant de tours que nécessaire pour que les bandes adhésives (105) forment la couche d'étanchéité (10), dans lequel
- la forme de la buse (51) est telle que les bandes adhésives (105) se chevauchent et forment une épaisseur continue et sensiblement uniforme de la couche d'étanchéité (10).

2. Procédé selon la revendication 1, **caractérisé en ce que** la couche d'étanchéité (10) est appliquée directement sur une peinture intérieure (111) du calandrage intérieur (11).

3. Procédé selon la revendication 1, **caractérisé en ce que** le calandrage intérieur ou la partie intérieure du pneu est nettoyé(e) avant que la couche d'étanchéité (10) ne soit appliquée sur le calandrage intérieur (11).

4. Procédé selon la revendication 3, **caractérisé en ce que** le calandrage intérieur du pneu est nettoyé mécaniquement et/ou chimiquement et/ou par d'autres moyens tels que par faisceau laser ou par chauffage.

5. Procédé selon la revendication 1, **caractérisé en ce qu'**une couche primaire est appliquée au côté intérieur du pneu pour assurer l'adhérence de la couche d'étanchéité (10).

6. Procédé selon la revendication 1, **caractérisé en ce que** la couche d'étanchéité (10) a une épaisseur de 3 mm ± 1,5 mm après un temps de prise.
